# EUROPEAN PATENT APPLICATION

(11) **EP 3 168 590 A1**
(43) Date of publication of application: **17.05.2017**
(21) Application number: 16198355.6
(22) Date of filing: 11.11.2016
(51) Int. Cl.: G01M 3/22, G01N 21/3504

(54) **SYSTEM AND METHOD FOR DETECTING LEAKS IN GENERATORS**

(30) Priority: 13.11.2015 US 201514941001
(71) Applicant: General Electric Company, Schenectady, NY 12345 (US)
(72) Inventor: XU, James Jun, Schenectady, NY 12345 (US); GRANT, James Jonathan, Schenectady, NY 12345 (US)
(74) Representative: Fischer, Jens Peter

(57) **Abstract**

A system (600) for detecting a gas leak in a machine (15) includes a source of a non-corrosive tracer gas, and a subsystem for introducing the non-corrosive tracer gas into the machine. An infrared imaging device (620) is adapted to communicate with a notification device (630) to display an image of at least a portion of the machine. The infrared imaging device has a cooled detector (24) and a filter (25) with a spectral response between about 3 µm and about 5 µm. At least one of the detector and the filter is cooled. The infrared imaging device includes one of a mercury cadmium telluride (MCT) photodetector, an indium antimonide (InSb) photodetector or a mid-wavelength quantum well infrared photodetector (QWIP). The notification device is adapted to indicate the gas leak.

## Description

### BACKGROUND OF THE INVENTION

The subject matter disclosed herein generally relates to detection of leaks and more particularly to the online detection of coolant leaks in hydrogen cooled generators.

Large generators are typically cooled with a light density gas. Hydrogen (H₂) has been widely used as a coolant due to its desirable thermophysical properties including low windage friction, high heat dissipation capability and high resistance to corona discharge when compared to other cooling gas options. Additionally, H₂ has the advantage of being readily accessible and inexpensive.

Leakage of H₂ may prevent the generator from operating efficiently, and in some cases may create power generation outages. Among possible areas of H₂ leakage around a generator, are flanged joints on the stator casing including high voltage bushings, seal casings and pipe flanges. Leaks may also occur around the interfaces of the cooler, welds, bolt heads and end shield. The bearing enclosure in the outer end shields, the rotor terminal packing, collector assembly as well as glands made for instrumentation wiring penetration may also be susceptible to leaks. Other air-tight transitions and welding joints may be sources of leaks, as well as the seal oil drain system, gas piping, and hydrogen cabinet where hydrogen scavenging lines and valves are arranged. If the generator is a water cooled generator the stator water cooled windings also may be a source of leaks into the stator water cooling system (SWCS) and hydrogen will be debubbled above the space of the water tank in the SWCS.

H₂ leaks are difficult to detect because H₂ is colorless, odorless, invisible from X-ray to radio wavelengths, and because of its low density it dissipates quickly when it leaks into the atmosphere. The technical challenges in monitoring and detecting a potential H₂ leak lie in identifying the exact location of H₂ leaking in a turbine generator, especially in inaccessible and space limited areas. Typically, a hydrogen leak is indicated only when the generator begins consuming more hydrogen than usual. In this scenario the operators are aware that a leak exists, but the location of the leak is unknown.

### BRIEF DESCRIPTION OF THE INVENTION

The disclosure provides a method and system for the remote, sensitive, accurate, safe, fast and on-line or off-line detection of an H₂ leak from an H₂ cooled generator that avoids health, environmental and safety concerns as well as avoiding corrosion of generator components. The method and system provide for introduction of a tracer gas so that tracer gas injection may be performed regularly in a controlled manner with the least disturbance imposed to gas pressure of an on-grid or off-grid generator. The method and system also provide introducing tracer gas without derating an on-grid generator, and/or the introduction of a tracer gas into a gas medium other than H₂ such as nitrogen or argon inside of a generator which may be in state of idling, or turning-gear, but may be brought online quickly.

In accordance with one aspect, a system for detecting a gas leak in a machine includes a source of a non-corrosive tracer gas, and a subsystem for introducing the non-corrosive tracer gas into the machine. An infrared imaging device is adapted to communicate with a notification device to display an image of at least a portion of the machine. The infrared imaging device has a cooled detector and a filter with a spectral response between about 3 µm and about 5 µm. At least one of the detector and the filter is cooled. The infrared imaging device includes one of a mercury cadmium telluride (MCT) photodetector, an indium antimonide (InSb) photodetector or a mid-wavelength quantum well infrared photodetector (QWIP). The notification device is adapted to indicate the gas leak.

In another aspect, a system for detecting a gas leak in a machine or hydrogen cooled generator includes a source of carbon dioxide (CO₂) tracer gas, and a subsystem for introducing the carbon dioxide gas into the machine or generator. The system also includes an infrared imaging device adapted to communicate with a notification device to display an image of at least a portion of the machine or generator. The infrared imaging device includes a cooled mid-wavelength detector and a filter with a spectral response between about 4.2 µm and about 4.4 µm. At least one of the detector and the filter is cooled to about -196 °C. The infrared imaging device includes one of a mercury cadmium telluride (MCT) photodetector, an indium antimonide (InSb) photodetector or a mid-wavelength quantum well infrared photodetector (QWIP). The notification device is adapted to indicate the gas leak.

In yet another aspect, a method for detecting a gas leak in a generator includes a disposing step that disposes an infrared imaging device having a detector and a filter having a spectral response between about 4.2 µm to about 4.4 µm with a field of view encompassing at least a portion of the generator. At least one of the detector and the filter is cooled to about -196 °C. The infrared imaging device includes one of a mercury cadmium telluride (MCT) photodetector, an indium antimonide (InSb) photodetector or a mid-wavelength quantum well infrared photodetector (QWIP). An introducing step introduces a tracer gas into the generator, and the tracer gas is carbon dioxide. A filtering step filters radiation received by the infrared imaging device in the absorption spectrum of the tracer gas. A displaying step displays a notification on a notification device, and the gas leak is indicated by the notification on the notification device.

### BRIEF DESCRIPTION OF THE DRAWINGS

Other features and advantages of the present invention will be apparent from the following more detailed description of the preferred embodiment, taken in conjunction with the accompanying drawings which illustrate, by way of example, the principles of certain aspects of the invention.
FIG. 1 illustrates a schematic view of a leak detection system, according to an aspect of the present invention.
FIG. 2 is a chart of the absorption spectrum of CO₂.
FIG. 3 is a chart of the absorption spectrum of Propane.
FIG. 4 is a chart of the absorption spectrum of n-Butane.
FIG. 5 illustrates the infrared signal intensity of various gases over various wavelengths.
FIG. 6 illustrates a partial perspective view of the system for detecting a gas leak in a hydrogen cooled generator, according to an aspect of the present invention.
FIG. 7 illustrates a screenshot capture from the infrared imaging device and display during leak detection, according to an aspect of the present invention.
FIG. 8 illustrates is a flow chart of a method for detecting a gas leak in a hydrogen cooled generator, according to an aspect of the present invention.
FIG. 9 illustrates is a flow chart of the displaying step, according to an aspect of the present invention.
FIG. 10 illustrates is a schematic of the display used for displaying an image used during leak detection, according to an aspect of the present invention.
FIG. 11 illustrates a schematic of an automatic tracer gas injection system mounted on an existing CO₂ purging pipeline in a gas manifold of a generator, which may be below the turbine deck.

### DETAILED DESCRIPTION OF THE INVENTION

Aspects of the present disclosure include a system for detecting a gas leak in dynamoelectric machines (e.g., motors or generators) or turbomachinery through the introduction of an environmentally safe and non-corrosive tracer gas into an on-grid or off-grid machine. An infrared imaging device adapted to display an image of the escaping tracer gas is provided.

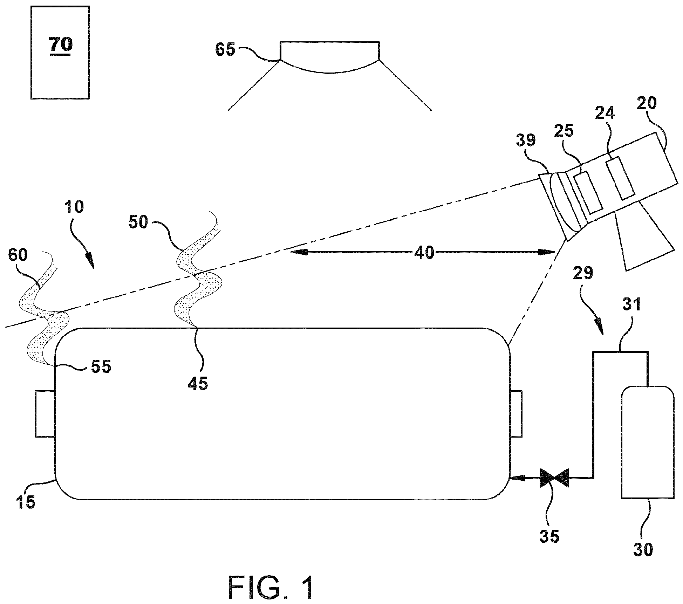

FIG. 1 illustrates a schematic of a system 10 for detecting a gas leak for use with a machine 15. Machine 15 may be a dynamoelectric machine, a hydrogen (H₂) cooled generator, a direct liquid cooled generator, a pressurized generator, a pressurized gas cooled generator, or a pressurized air cooled generator, a motor, a synchronous condenser, a steam turbine or any machine, sealed vessel, container, or tank in need of leak detection. The phrase "leak detection" includes detecting leaks as well as locating leak sources. The leak detection system 10 includes an infrared imaging device 20 capable of scanning large or small portions of the machine 15. The infrared imaging device may include lenses made with germanium or other infrared transparent glass materials. The infrared imaging device 20 may be a portable, hand held, midwave infrared camera with a cooled detector 24 having a response of about 3 µm to about 5 µm and may be further spectrally adapted to about 4.2 µm to about 4.4 µm by use of a filter 25. The detector 24 and a filter 25 may be in contact each other so that the filter may be cooled along with the detector, thereby further enhancing the detecting sensitivity. The filter 25 restricts the wavelengths of radiation allowed to pass through to the detector 24 to a very narrow band called the band pass. This technique is called spectral adaptation. This makes the infrared imaging device 20 most responsive to gases that can be used as tracer gases. In other aspects of the invention, one or more filters 25 may be used in series, for example, a first filter with a spectral response of 3 µm to 5 µm may be stacked in series with a second filter having a spectral response of 4.2 µm to 4.4 µm. In addition, filter 25 may also be placed external to infrared imaging device 20, resulting in increased versatility.

The leak detection system 10 may include a subsystem 29 for introducing a tracer gas, including a source of tracer gas 30 coupled to the machine 15 through conduit 31 and control valve 35. An automatic tracer gas injection system (not shown) may include an algorithm and be monitored in a turbine deck control room if the automatic tracer gas injection is employed for large volume turbogenerators. The infrared imaging device 20 may include an outer lens 39 that provides the infrared imaging device 20 with a field of view 40 encompassing a portion of the H₂ cooled turbine generator 15. For example, the lens 39 may have a fixed focal length of about 14mm to about 60mm, or more. The lens 39 may also comprise a multi-focal lens having a range of focal lengths (e.g., a zoom lens). In general, most uses will be inside buildings, so a wider field of view (lower numerical focal length such as 25 mm or 12.5 mm) may be preferred. However, a narrow field of view (higher numerical focal length such as 50 mm or 100 mm) may be advantageous to pinpoint leaks in some applications. If there is a leak point 45 (such as at a cooler gasket or bolt leak) on the machine 15 the leaking gas will generate a leak gas cloud 50 emanating from the leak point 45. Similarly, if there is a leak point 55 (such as at an end shield) on the machine 15 the leaking gas will generate a leak gas cloud 60 emanating from the leak point 55. Leak gas cloud 50 and leak gas cloud 60 will contain tracer gas capable of being detected by the infrared imaging device 20.

In operation, the infrared imaging device 20 displays an image of the leaking gas cloud 50 by rendering opaque (or visible) the tracer gas in the leaking gas cloud 50. For many gases, the ability to absorb infrared radiation depends on the wavelength of the radiation and temperature difference between leaking tracer gases and ambient. In other words, their degree of transparency varies with wavelength, and detecting sensitivity with temperature differential. There may be infrared wavelengths where they are essentially opaque due to absorption. The infrared imaging device 20 is adapted to visualize the absorptive and emissive properties of tracer gases allowing the user the ability to discern the tracer gas from its host environment. The filter 25 is designed to transmit in an infrared spectrum that is coincident in wavelength with vibrational/rotational energy transitions and emission of the molecular bonds of the tracer gas. These transitions and emissions are typically strongly coupled to the field via dipole moment changes in the molecule, and are common to many types of gases and vapors. The detector 24 of the infrared imaging device 20 may be cooled to about -80 °C to about -200 °C, or to about -196 °C, and may include an integrated dewar/detector cooler assembly (IDCA), a mercury cadmium telluride (MCT) photodetector, an indium antimonide (InSb) photodetector or a mid-wavelength quantum well infrared photodetector (QWIP) to increase the sensitivity of remote imaging of tracer gases. The thermal sensitivity is typically less than 20 mK, and more preferably less than 14 mK. The filter 25 may be mounted on the outer lens 39, or behind the outer lens 39, or inside the infrared imaging device 20 for increased sensitivity. The device may be calibrated and tuned with the largest contrast possible using modes of absorption, reflection or scattering or emission so that the exact pressure, flow rate and temperature gradient of leaking tracer gas may be identified from varying detection distances.

Mercury cadmium telluride (MCT) is one material well suited for use in infrared sensing and imaging. MCT can be 'tuned' to the desired infrared wavelength by varying the cadmium concentration. Detection in the mid-wavelength infrared range may be obtained using about 30% (Hg_{0.7}Cd_{0.3})Te and about 20% (Hg_{0.8}Cd_{0.2})Te cadmium respectively, however, any suitable MCT material and composition may be used as desired in the specific application. Indium antimonide (InSb) is a crystalline compound made from the indium (In) and antimony (Sb). It is a narrow-gap semiconductor material from the III-V group and is well suited for infrared detectors. Indium antimonide detectors are typically sensitive between 1-5 µm wavelengths.

A Quantum Well Infrared Photodetector (QWIP) is an infrared photodetector, which uses electronic intersubband transitions in quantum wells to absorb photons. The basic elements of a QWIP are quantum wells, which are separated by barriers. The quantum wells are designed to have one confined state inside the well and a first excited state which aligns with the top of the barrier. The wells are n-doped such that the ground state is filled with electrons. The barriers are wide enough to prevent quantum tunneling between the quantum wells. Typical QWIPs consists of 20 to 50 quantum wells. When a bias voltage is applied to the QWIP, the entire conduction band is tilted. Without light the electrons in the quantum wells just sit in the ground state. When the QWIP is illuminated with light of the same or higher energy as the intersubband transition energy, an electron is excited. For operation in the 3 to 5 µm wavelength band, the difference in energy between the subbands must be between about 250 meV (for 5-µm operation) to about 413 meV (for 3-µm operation). Therefore, for mid-wavelength operation, the depth of the well must be on the order of about 500 meV or larger.

If the infrared imaging device 20 is directed at a machine 15 without a gas leak, objects in the field of view will emit and reflect infrared radiation through the filter 25 of the infrared imaging device 20. The filter 25 will allow only certain wavelengths of radiation through to the detector 24 and from this the infrared imaging device 20 will generate an uncompensated image of gaseous radiation intensity. If there is a leak within the field of view 40 of the infrared imaging device 20 such as at leak point 45, a leaking gas cloud (or plume) 50 will be generated at the leaking locale and may dissipate between the machine 15 and the infrared imaging device 20. The gas cloud 50 will contain tracer gas that absorbs and emits radiation in the band pass range of the filter 25, and consequently the amount of background radiation passing through the cloud and returning to the detector 24 will be reduced, thereby making the tracer gas cloud visible through the infrared imaging device 20. If there is a leak outside of the field of view 40 of the infrared imaging device 20 such as at leak point 55, the portions of the leak gas cloud 60 would still be detected by the infrared imaging device 20. If desired, the corresponding level of H₂ can be estimated.

The tracer gas and its decomposition products, if any, should be environmentally safe from the point of view of toxicity. The tracer gas is preferably non-corrosive. Additionally, the tracer gas should not cause damage to the machine or generator insulation systems, or corrosive damage to steel retaining rings, and fan blades. Tracer gases may include hydrocarbon gases such as, for example Butane, Ethane, Heptane, Propane and the like. Preferably the tracer gas is carbon dioxide (CO₂), which has unlimited mixing limits with both air and hydrogen. In addition, CO₂ is typically already present on site, as it is one of such intermediate gases used in the normal start-up and shut-down purging procedures in utility scale generators. The background absorption of the CO₂ content of the atmosphere (about 400 ppm) may be eliminated when CO₂ is used as the tracer gas at concentrations greater than 400 ppm.

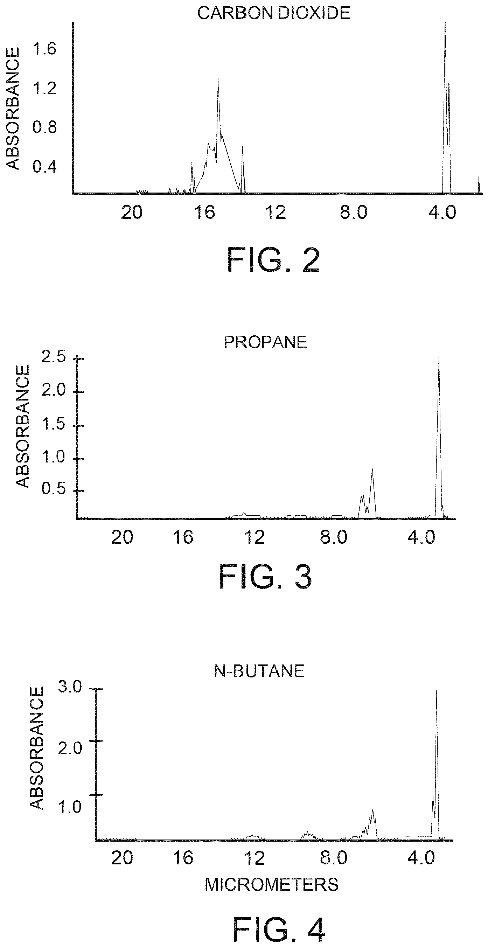

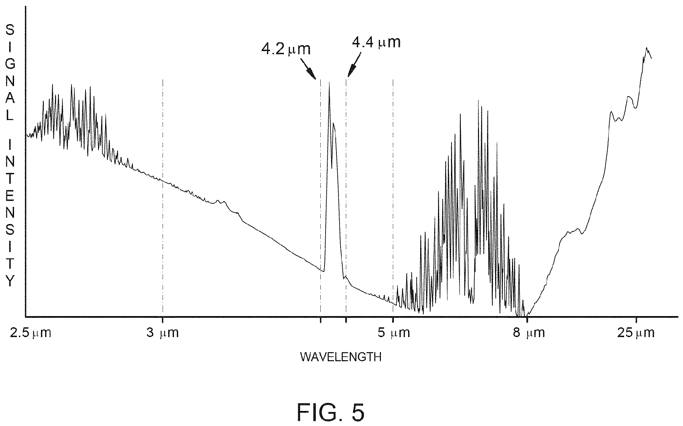

Illustrated in FIGs. 2, 3 and 4 are the absorption spectra of CO₂, propane and n-butane respectively. As can be seen from the charts, CO₂, propane and n-Butane have a maximal absorption peak near 4 µm that can be detected with an infrared imaging device 20. FIG. 5 illustrates the infrared signal intensity of various gases over various wavelengths. In the wavelength range of 2.5 µm to less than 3 µm, and 5 µm to 8 µm water (H₂O) molecules have a strong infrared signal. The infrared signal intensity of hydrocarbons is fairly linear over the wavelength range of 3 µm to 5 µm, except for a peak at about 4.2 µm to about 4.4 µm. This peak at 4.2 µm to 4.4 µm is due to carbon dioxide (CO₂). This means that CO₂ will be easy to distinguish (visually) from background radiation in this relatively narrow infrared band, assuming the detector is tuned to this wavelength band. The difficulty arises in that most detectors can't detect or distinguish infrared signals in this band, especially in distance, due to overwhelming background interference. However, according to an aspect of the present invention, a cooled infrared detector or imaging device having a filter of about 3 µm to about 5 µm, or more preferably about 4.2 µm to about 4.4 µm, will be capable of detecting CO₂ in suitable distances for real world applications. The cooled detector aspect reduces photon interference that typically plagues other detectors, and the bandpass filter eliminates interference from other commonly present gases or molecules by focusing on the high contrast (or intensity) signal of CO₂.

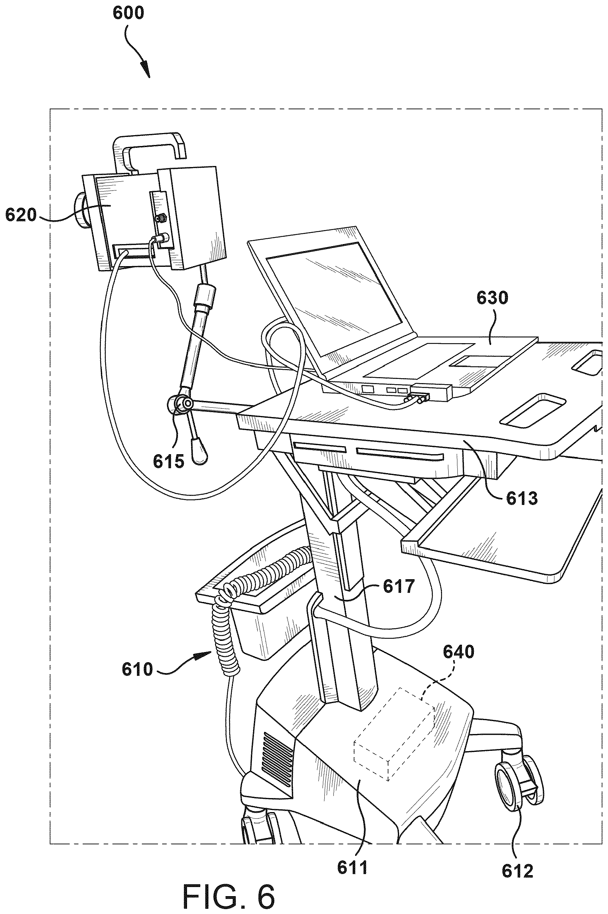

FIG. 6 illustrates a partial perspective view of a system 600 for detecting a gas leak in a hydrogen cooled generator. The system 600 may include a movable cart 610 that is configured to facilitate movement of the infrared imaging device 620 and a notification device (or display) 630 around the hydrogen cooled generator 15. The cart 610 includes a base 611 having a plurality of wheels 612. The wheels 612 may be swivel caster wheels having a single, double, or compound wheel configuration. The wheels 612 are attached to the base 611 so as to enable the cart 610 to be easily moved. The wheels 612 may be comprised of rubber, plastic, nylon, aluminum, or stainless steel, or combinations thereof. A hinged arm 615 is connected to the cart and the infrared imaging device may be attached to the arm 615. The arm 615 allows the infrared imaging device to be moved into a variety of positions and facilitates aiming of the infrared imaging device 620. A support arm 617 allows the working platform 613 to be adjusted for height and position. The platform 613 may function as a support for the infrared imaging device 620 and display 630. However, in some cases the cart may not be needed and the infrared imaging device 620 may be a portable and handheld device, such as a video camera, camcorder, or any other suitable imaging device.

The infrared imaging device 620 was described previously, and is a cooled infrared imaging detector, and may be mounted to platform 613 or the extendable and/or flexible arm 615. The imaging device 620 may also be removed from the platform 613 or arm 615 and moved independently around the generator by an operator or technician. The imaging device 620 may be connected to the notification device 630 by a wired or wireless link. A wired link may be a USB connection, serial or parallel connectors/cables, video cable or any other suitable wired connection. A wireless link may include a bluetooth, wifi, radio frequency, or any other suitable wireless communication system/interface. The notification device 630 may take the form of a special or general purpose digital computer, such as a personal computer (PC; IBM-compatible, Apple-compatible, Android or otherwise), laptop, netbook, tablet, smartphone, workstation, minicomputer, or any other suitable computer and display device. The notification device 630 receives image data from the imaging device 620 and displays the result in real time, or near real time, on a display. The platform 616 may include a battery or battery bank 640 which may be certified to be used in a class 1 division environment to provide power to the notification device 630 and camera 620. The battery bank 640 may be housed on the base 611 or it may be incorporated into the platform 613 so that it resides under notification device 630. In this manner, the system 600 is a self-contained and powered mobile system that can be easily moved around the generator 15 and positioned to image specific regions of interest.

The notification device 630 may also display a warning or notification that a potential leak has been detected. An optional text message 730 or display can be shown on the notification device 630. For example, text 730 could flash on and off, or be displayed in a high-contrast color. The high-contrast color could be white on a grayscale display, or red on a color display, or any other suitable high contrast color that facilitates identification. An audible signal (e.g., a beep or siren) can be output from a speaker associated with the notification device 630. A border 740 could be drawn around the potential leak cloud 720 on the display of the notification device. A fax could be sent to a fax machine indicating the leak has been detected. A text message (or image or video or alarm) could be sent to a smartphone, tablet or computer indicating leak detection. A signal could also be sent to a remote or local monitoring site to indicate that a leak was detected.

The infrared gas imaging detection system illustrated in FIG. 6 can be camerized with a miniature IDCA mounted inside of a video or thermal infrared camera. In this case, the small infrared microbolometer inside of a thermal camera can be replaced with an IDCA. The above mentioned infrared gas imaging detection apparatus in FIG. 6 can be further miniaturized using a cell or mobile phone 70 (see FIG. 1) as a display and a miniaturized filtered IDCA detector and infrared lens with apps (programs) installed on the mobile phone 70 for operational control. The mobile phone 70 may communicate with and control the camera 20, 620 via a wireless link, such as wifi, Bluetooth®, radio or infrared, or any other suitable wireless communication technology. In this fashion, the camera and imaging display of FIG. 6 may be omitted by using the mobile phone 70 camera and apps (programs) contained on the mobile phone 70. It is to be understood that mobile phone 70 could alternatively be a tablet, laptop, portable or handheld computing apparatus or any other suitable device.

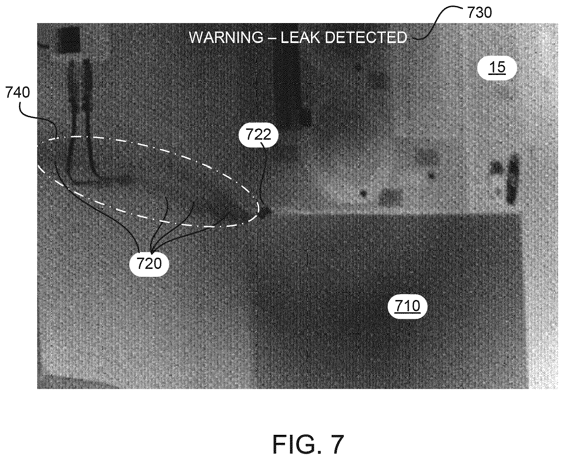

FIG. 7 illustrates a screenshot capture from the infrared imaging device 620 and display of notification device 630 during a leak detection. A portion of the generator 15 is shown and the top of the H₂ cabinet door 710 is in the field of view of camera 620. A leaking dark cloud 720 can be seen emanating from a corner of the door 710. The leak begins at point 722 and the gas cloud 720 is blowing or drifting to the left (as shown). In this example, the H₂ cooled generator 15 is in operation and/or generating power (or on-line). The CO₂ tracer gas (which is non-corrosive) is escaping from a leak somewhere in the H₂ cabinet where hydrogen scavenging lines and pressure valves are located. The gas cloud 722 is invisible to the naked eye, but is made visible on the display or notification device 630 via infrared imaging device 620 and the appropriate filters (e.g., a 3 µm to 5 µm, or 4.2 µm to 4.4 µm bandpass optical filter). In the example of FIG. 7, a 3 µm to 5 µm bandpass optical filter was used because the detection device is closely placed several feet in distance. FIG. 7 shows a static photograph (or screen capture), but even in a still image it will be clear that something is concerning in the image, as the dark gas cloud 720 should not be there in a non-leaking generator 15. The camera 620 and display 630 can be used to display video images as well, and with a video display the gas cloud 720 can be seen to physically move on the display of notification device 630. The relative motion between the moving gas cloud 720 and the static (or non-moving generator parts) makes it very easy for a person to identify that a leak is occurring and where the leak begins. In this example, the H₂ cabinet door can be opened and another scan can take place to pinpoint the exact leak location.

The function of the infrared gas imaging device is mainly to identify the leak site. However, in certain circumstances, one may also estimate the leaking rate by tracing the tip of the plume to travel in a one inch cubic foot space in approximately one second of time. One cubic inch per second is equal to approximately 50 cubic feet of leaking H₂ a day.

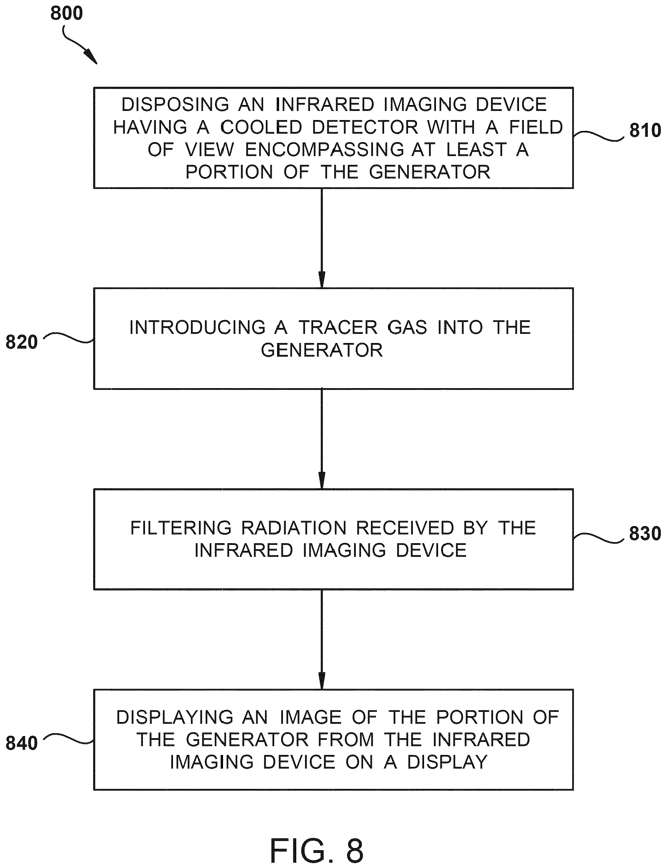

FIG. 8 illustrates a flow chart of a method 800 for detecting a gas leak in a machine or hydrogen cooled generator 15, according to an aspect of the present invention. The method 800 includes the steps of disposing 810 an infrared imaging device 620 having a cooled detector with a filter having a spectral response between about 3 µm to about 5 µm, or about 4.2 µm to about 4.4 µm with a field of view encompassing at least a portion of the generator 15. The infrared imaging device includes a detector and a filter, and at least one of the detector and the filter is cooled. For example, the detector and/or filter may be cooled to about -196 °C, or any other suitable temperature as desired in the specific application. The infrared imaging device includes a mercury cadmium telluride (MCT) photodetector, or an indium antimonide (InSb) photodetector, or a mid-wavelength quantum well infrared photodetector (QWIP).

An introducing step 820 introduces a tracer gas into the generator 15. The tracer gas may be carbon dioxide. The generator may be on-line, on-grid, off-line, off-grid or on turning gears. The tracer gas has an absorption spectrum of between about 3 µm and about 5 µm. The introducing step 820 may also include removing some of the hydrogen to lower pressure in the generator by about 2 PSI to about 10 PSI, and/or injecting carbon dioxide into the generator until the pressure in the generator rises by about 2 PSI to about 10 PSI. The introducing step may include injecting carbon dioxide into the generator until the hydrogen purity inside the generator is about 90% to about 95%, or injecting carbon dioxide into the generator, monitoring the weight of carbon dioxide used, and ceasing injection of carbon dioxide when a predetermined weight of CO₂ has been reached. If the generator is on-grid or on-line, the carbon dioxide is injected/introduced into the generator until a mixture of hydrogen and carbon dioxide has a content ratio of carbon dioxide of between about 0.1% to about 10%. If the generator is off-grid or off-line, the carbon dioxide is injected into the generator until a mixture of hydrogen and carbon dioxide has a content ratio of carbon dioxide of between about 0.1% to about 100%.

A filtering and/or detecting step 830 filters radiation received by the infrared imaging device 620 in the absorption spectrum of the tracer gas. The filtering and/or detecting step 830 may include filtering the radiation with a filter having a spectral response between about 4.2 µm and about 4.4 µm. The method 800 may also include cooling the detector and/or the filter to between about -80 °C and about -200 °C, or to about -196 °C, to increase sensitivity to the tracer gas and reduce interference from other atmospheric constituents.

A display step 840 displays an image of all or a portion of the generator 15 from the infrared imaging device 620 on a display of notification device 630. The gas leak will be indicated by a cloud 720 of tracer gas leaking from the generator 15 on the display. The display step 840 may also include displaying a moving cloud on the display if a leak is detected. A video signal may be used to display a video image that is displayed in real time or near real time.

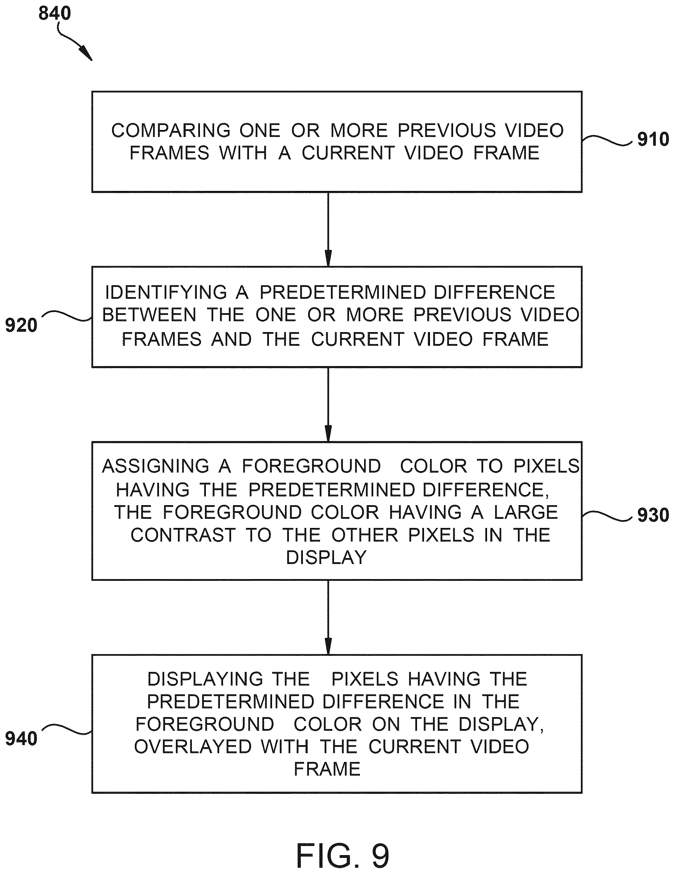

FIG. 9 illustrates a flowchart of optional steps for use with the display step 840 of FIG. 8. The display step 840 may further include a comparing step 910 that compares one or more previous video frames with a current video frame. An identifying step 920 identifies a predetermined difference between the one or more previous video frames and the current video frame. An assigning step 930 assigns a foreground color to pixels having the predetermined difference, and the foreground color has a large contrast to the other pixels in the display. For example, if the primary color scheme of the image is grayscale (or black and white), then the foreground color may be red, which would provide a large contrast and make the moving red pixels easily visible against a grayscale background. A display step 940 is used to display the pixels having the predetermined difference in the foreground color on the display, overlaid with the current video frame. In this manner, it will be easy for a user (or technician) to identify if a leak is occurring, and where the leak is occurring.

Alternatively, the display step 840 may include a comparing step that compares one or more previous video frames with a current video frame, and an identifying step that identifies a predetermined difference between the one or more previous video frames and the current video frame. An assigning step assigns a foreground color to a border surrounding the pixels having the predetermined difference, and the foreground color has a large contrast to the other pixels in the display. A displaying step displays the border, around the pixels having the predetermined difference, in the foreground color on the display, where the border overlaid with the current video frame. For example, if the primary color scheme of the image is grayscale (or black and white), then the border color may be red, green or yellow, which would provide a large contrast and make the moving red, green or yellow pixels easily visible against a grayscale background. Any color may be chosen to provide contrast, as desired in the specific application or by the needs of the specific user. For example, a color blind person may choose a specific color that has a large contrast from their perception.

The display step 840 may also include a comparing step that compares one or more video frames with an adjacent video frame, and an identifying step that identifies a predetermined difference between the one or more video frames and the adjacent video frame. An assigning step assigns at least one of, a foreground color to pixels having the predetermined difference or a foreground color to a border surrounding the pixels having the predetermined difference. The foreground color has a large contrast to other pixels in the display. A displaying step displays at least one of, the pixels having the predetermined difference in the foreground color on the display, or the border in the foreground color on the display around the pixels having the predetermined difference, overlaid with a current video frame.

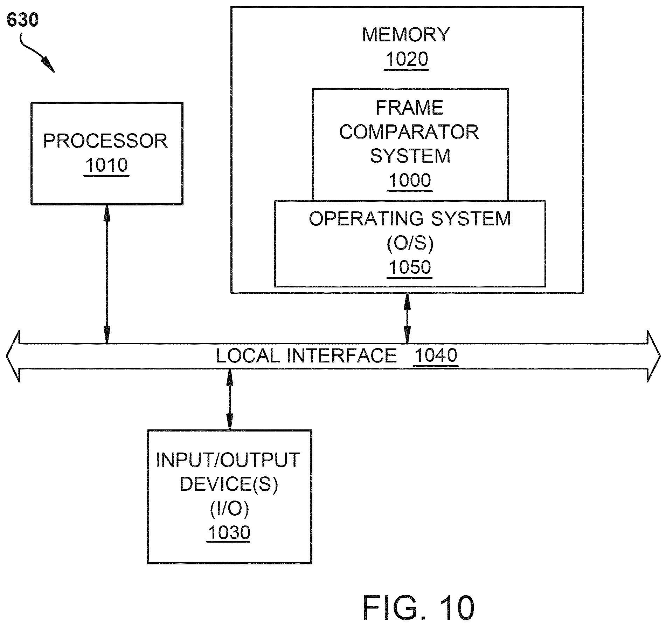

The notification device 630 and frame comparator system 1000 of the invention can be implemented in software (e.g., firmware), hardware, or a combination thereof. In the currently contemplated best mode, the frame comparator system 1000 is implemented in software, as an executable program, and is executed by a special or general purpose digital computer, such as a personal computer (PC; IBM-compatible, Apple-compatible, or otherwise), laptop, tablet, smartphone, workstation, minicomputer, or mainframe computer. An example of a general purpose computer that can implement the frame comparator system 1000 of the present invention is shown in FIG. 10.

Generally, in terms of hardware architecture, as shown in FIG. 10, the computer or display 630 includes a processor 1010, memory 1020, and one or more input and/or output (I/O) devices 1030 (or peripherals) that are communicatively coupled via a local interface 1040. The local interface 1040 can be, for example but not limited to, one or more buses or other wired or wireless connections, as is known in the art. The local interface 1040 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 1010 is a hardware device for executing software, particularly that stored in memory 1020. The processor 1010 can be any custom made or commercially available processor, a central processing unit (CPU), an auxiliary processor among several processors associated with the computer 630, a semiconductor based microprocessor (in the form of a microchip or chip set), a macroprocessor, or generally any device for executing software instructions. Examples of suitable commercially available microprocessors are as follows: a PA-RISC series microprocessor from Hewlett-Packard Company, a core 2, i3, i5 or i7 series microprocessor from Intel Corporation, a PowerPC microprocessor from IBM, a Sparc microprocessor from Sun Microsystems, Inc., or a 68xxx series microprocessor from Motorola Corporation.

The memory 1020 can include any one or combination of volatile memory elements (e.g., random access memory (RAM, such as DRAM, SRAM, SDRAM, *etc.*)) and nonvolatile memory elements (*e.g.,* ROM, hard drive, tape, CDROM, *etc.*). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in memory 1020 may include one or more separate programs, each of which comprises an ordered listing of executable instructions for implementing logical functions. In the example of FIG. 1, the software in the memory 1020 includes the frame comparator system 1000 in accordance with the present invention and a suitable operating system (O/S) 1050. A nonexhaustive list of examples of suitable commercially available operating systems 1050 is as follows: (a) a Windows operating system available from Microsoft Corporation; (b) a Netware operating system available from Novell, Inc.; (c) a Macintosh operating system available from Apple Computer, Inc.; (e) a UNIX operating system, which is available for purchase from many vendors, such as the Hewlett-Packard Company, Sun Microsystems, Inc., and AT&T Corporation; (d) a LINUX operating system, which is freeware that is readily available on the Internet; (e) a run time Vxworks operating system from WindRiver Systems, Inc.; or (f) an appliance-based operating system, such as that implemented in handheld computers or personal data assistants (PDAs) (e.g., PalmOS available from Palm Computing, Inc., and Windows CE available from Microsoft Corporation). The operating system 1050 essentially controls the execution of other computer programs, such as the frame comparator system 1000, and provides scheduling, input-output control, file and data management, memory management, and communication control and related services. In addition, a graphics processing unit (not shown) resident on a motherboard (not shown) may also be used to implement the frame comparator system 1000.

The frame comparator system 1000 is a source program, executable program (object code), script, or any other entity comprising a set of instructions to be performed. When a source program, then the program needs to be translated via a compiler, assembler, interpreter, or the like, which may or may not be included within the memory 1020, so as to operate properly in connection with the O/S 1050. Furthermore, the frame comparator system 1000 can be written as (a) an object oriented programming language, which has classes of data and methods, or (b) a procedure programming language, which has routines, subroutines, and/or functions, for example but not limited to, C, C+ +, Pascal, Basic, Fortran, Cobol, Perl, Java, and Ada.

The I/O devices 1030 may include input devices, for example but not limited to, a keyboard, mouse, scanner, microphone, camera, infrared imaging device or camera, etc. Furthermore, the I/O devices 1030 may also include output devices, for example but not limited to, a printer, display, etc. Finally, the I/O devices 1030 may further include devices that communicate both inputs and outputs, for instance but not limited to, a modulator/demodulator (modem; for accessing another device, system, or network), a radio frequency (RF), wifi, Bluetooth or other transceiver, a telephonic interface, a bridge, a router, etc.

If the computer 630 is a PC, workstation, or the like, the software in the memory 1020 may further include a basic input output system (BIOS) (omitted for simplicity). The BIOS is a set of essential software routines that initialize and test hardware at startup, start the O/S 1050, and support the transfer of data among the hardware devices. The BIOS is stored in ROM so that the BIOS can be executed when the computer 630 is activated.

When the computer 630 is in operation, the processor 1010 is configured to execute software stored within the memory 1020, to communicate data to and from the memory 1020, and to generally control operations of the computer 630 pursuant to the software. The frame comparator system 1000 and the O/S 1050, in whole or in part, but typically the latter, are read by the processor 1010, perhaps buffered within the processor 1010, and then executed.

When the frame comparator system 1000 is implemented in software, as is shown in FIG. 10, it should be noted that the frame comparator system 1000 can be stored on any computer readable medium for use by or in connection with any computer related system or method. In the context of this document, a computer readable medium is an electronic, magnetic, optical, or other physical device or means that can contain or store a computer program for use by or in connection with a computer related system or method. The frame comparator system 1000 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

In an alternative embodiment, where the frame comparator system 1000 is implemented in hardware, the frame comparator system 1000 can implemented with any or a combination of the following technologies, which are each well known in the art: a graphics processing unit, a video card, a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

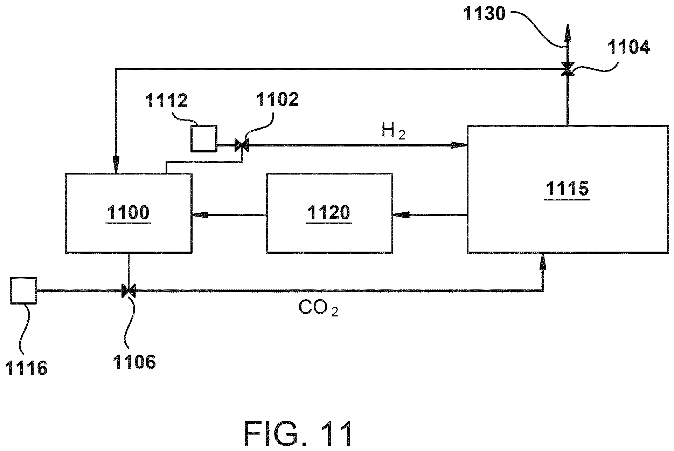

Figure 11 illustrates a schematic of an automatic tracer gas injection control system 1100. The control system 1100 may be mounted in the manifold area associated with generator 1115, and may be monitored in a control room. The algorithm used by the automatic injection control system 1100 monitors both H₂ purity and gas pressure in the generator 1115. The H₂ feeding valve 1102 is first turned off, and hydrogen supplied from H₂ supply 1112 is ceased. H₂ vent flow through the scavenging pipeline 1130 is controlled to be on and off to match the introduction of the tracer gas, via H₂ vent valve 1104. The CO₂ injection valve 1106 controls CO₂ supply from a CO₂ source 1116. The CO₂ injection valve 1106 may be adjusted based on the gradual reduction of H₂ purity, by monitoring H₂ purity meter 1120. The pressure in the generator 1115 may fluctuate slightly (e.g., fluctuation within 3%, and preferably within 2%, and more preferably within <1%). The introduction of tracer gas is controlled between 1% to 10% in volume so that total H₂ purity in the casing may be always above 90%. Knowing that CO₂ may act as a non-air gas medium, 90% H₂ purity in this tertiary gas mixture in the generator 1115 may actually be "inaccurate" as the real H₂ purity may be close to its original H₂ purity prior to the introduction of CO₂. The automatic control of tracer gas introduction may be preferable for large generators so that the introduction can be accomplished in about 30 minutes to about 90 minutes.

Manual introduction of a tracer gas may be practiced when the generator is relatively small (e.g., <100MW) with a casing volume below 1000 cubic feet and gas volume below 3,000 cubic feet. This may be achieved by either lowering about 5% casing pressure prior to the introduction, or weighing consumption of the tracer gas bottle on a scale after calculating the needed volume of a tracer gas. The introducing step may include controlling an injection flow of the non-corrosive tracer gas based upon feedback of a gas pressure, an H₂ purity, and flow through the H₂ scavenging pipe 1130. The automatic tracer gas control system 1100 targets gradual reduction of the H₂ purity while keeping the gas pressure inside of the generator 1115 substantially stable, and the gas pressure swing is within about 5% of a gas pressure original value. The step of introducing the tracer gas may also include injecting CO₂ into the generator 1115, where the generator has a cooling gas media of argon or nitrogen while the generator is on turning gears or on-line.

A turning gear may be engaged when there is no steam (for a steam turbine) or no combustion gas flow (for a gas turbine) to slowly rotate the turbine to ensure even heating to prevent uneven expansion. The generator is typically mechanically connected to the output of the gas or steam turbine. After first rotating the turbine by the turning gear, allowing time for the rotor to assume a straight plane (no bowing), then the turning gear may be disengaged and steam is admitted to the turbine or gas combustion flow begins in the gas turbine. The terms "on turning gears", "off-line" or "off-grid" may be viewed as equivalent from the generator or machine perspective, because the generator will be in some state of operation, but not providing rated power. When the generator or machine is "on-grid" or "on-line", the generator is connected to and providing power to the grid at rated power or at a power level sufficient to be considered on-line. The machine is generally considered to be "off-line" at lower machine rotor revolutions per minute (rpm), and the machine is generally considered to be "on-line" at higher machine rpm.

The H₂ purity meter 1120 is typically calibrated based upon the thermal conductivity of a binary gas medium of air and hydrogen. The introduction of a tracer gas may result in the purity meter reading slightly higher than the actual H₂ purity in the generator casing. For a 5% volume of CO₂ injection into an on-grid generator with starting H₂ purity in the casing at 98%, the actual H₂ purity may be at 92.8% in the casing if the H₂ purity meter reads 93%, or the actual H₂ purity may be at 93% in the casing if the H₂ purity meter reads at 93.2%.

The simulated temperature increase in stator windings, stator cores and rotor may be well within specified design limits for almost all generators up to about 1.2 GW output with the introduction of about 5% volume of CO₂. The windage loss and fan pressure differential may be increased, but fan pressure differential increase may be too small to make any deflection on the fan tip typically made with steel alloy materials. Total KW loss may be increased by less than 5% at 5% volume of CO₂ introduction from the level prior to CO₂ introduction. Therefore, de-rating of the on-grid (or on-line) generator in rated days and hot days may not be required.

The tracer gas such as CO₂ may also be introduced into a non-hydrogen gas media such as nitrogen and or argon when either of them present in a generator either on-line or on-grid or on turning gears. A CO₂ purity meter may be used for this application. An example using a hydrogen cooled generator was described, however, any suitable machine may be used with the system and method of the present invention. The machine may be a generator, a pressurized generator, a hydrogen cooled generator, an air cooled generator, a turbine, a steam turbine, a gas turbine, a motor or a compressor.

The system and method according to the present invention demonstrates substantially improved results because a leak can now be detected in an on-line, on-grid or on turning gears generator. Previously, the generator had to be taken off-line and a time consuming and expensive process was needed for leak detection, and/or the hydrogen leak was effectively invisible to the naked eye. The substantially improved results are obtained by scanning an on-line or operating generator and by using an infrared imaging device configured to detect a leaking gas cloud emanating from the generator.

Pressurized turbine generators are one example of machines that can benefit from the above described leak detection method and system. However, the leak detection method and system according to aspects of the present invention may also be applied to any sealed tank or container requiring the sealing or leak examination prior to its use or during its use. This applies with hydrogen gas, inert gas, or pressurized or non-pressurized machines. As non-limiting examples only, aeronautical fuel tanks, marine fuel tanks or automotive fuel tanks may also be used with the above described leak detection method and system.

Where the definition of terms departs from the commonly used meaning of the term, applicant intends to utilize the definitions provided below, unless specifically indicated. The terminology used herein is for the purpose of describing particular embodiments only and is not intended to be limiting of the invention. For example, the above-described embodiments (and/or aspects thereof) may be used in combination with each other. In addition, many modifications may be made to adapt a particular situation or material to the teachings of the invention without departing from its scope. For example, the ordering of steps recited in a method need not be performed in a particular order unless explicitly stated or implicitly required (e.g., one step requires the results or a product of a previous step to be available). Where the definition of terms departs from the commonly used meaning of the term, applicant intends to utilize the definitions provided herein, unless specifically indicated. The singular forms "a", "an" and "the" are intended to include the plural forms as well, unless the context clearly indicates otherwise. It will be understood that, although the terms first, second, etc. may be used to describe various elements, these elements should not be limited by these terms. These terms are only used to distinguish one element from another. The term "and/or" includes any, and all, combinations of one or more of the associated listed items. The phrases "coupled to" and "coupled with" contemplates direct or indirect coupling.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements.

## Claims

1. A system (600) for detecting a gas leak (50) in a machine (15), the system comprising:
a source of a non-corrosive tracer gas (30);
a subsystem (29) for introducing the non-corrosive tracer gas into the machine (15);
an infrared imaging device (620) adapted to communicate with a notification device (630) to display an image of at least a portion of the machine (15), the infrared imaging device (620) comprising a cooled detector (24) and a filter (25) with a spectral response between about 3 µm and about 5 µm, wherein at least one of the detector (24) and the filter (25) is cooled, the infrared imaging device (620) comprising one of a mercury cadmium telluride (MCT) photodetector, an indium antimonide (InSb) photodetector or a mid-wavelength quantum well infrared photodetector (QWIP); and
wherein the notification device (630) is adapted to indicate the gas leak (50).

2. The system of claim 1, wherein the machine (15) is a hydrogen cooled generator that is on-line or on-grid.

3. The system of claim 1, wherein the machine (15) is one of a dynamoelectric machine, a hydrogen (H₂) cooled generator, a direct liquid cooled generator, a pressurized generator, a pressurized gas cooled generator, a pressurized air cooled generator, a motor, a synchronous condenser, a steam turbine, or a sealed vessel.

4. The system of claim 1, wherein the non-corrosive tracer gas is carbon dioxide (CO₂) or a hydrocarbon gas.

5. The system of claim 1, wherein the spectral response of the filter (25) is between about 4.2 µm and about 4.4 µm.

6. The system of claim 1, wherein the infrared imaging device (620) is the mercury cadmium telluride (MCT) photodetector.

7. The system of claim 1, wherein the infrared imaging device (620) is the indium antimonide (InSb) photodetector.

8. The system of claim 1, wherein the infrared imaging device (620) is the mid-wavelength quantum well infrared photodetector (QWIP).

9. The system of claim 1, wherein the non-corrosive tracer gas is carbon dioxide (CO₂) and the machine (15) is a hydrogen cooled generator that is on-grid or on-line, the CO₂ is injected into the hydrogen cooled generator until a mixture of hydrogen and CO₂ has a content ratio of CO₂ of between about 0.1% to about 10%.

10. The system of claim 1, wherein the non-corrosive tracer gas is carbon dioxide (CO₂) and the machine (15) is a hydrogen cooled generator that is off-grid or off-line, the CO₂ is injected into the hydrogen cooled generator until a mixture of hydrogen and CO₂ has a content ratio of CO₂ of between about 0.1% to about 100%.

11. A method (800) for detecting a gas leak (50) in a machine (15), the method comprising:
disposing (810) an infrared imaging device (620) having a detector (24) and a filter (25) having a spectral response between about 4.2 µm to about 4.4 µm with a field of view encompassing at least a portion of the machine (15), at least one of the detector (24) and the filter (25) is cooled to about -196 °C, the infrared imaging device (620) comprising one of a mercury cadmium telluride (MCT) photodetector, an indium antimonide (InSb) photodetector or a mid-wavelength quantum well infrared photodetector (QWIP);
introducing (820) a tracer gas into the machine (15), the tracer gas is carbon dioxide;
filtering (830) radiation received by the infrared imaging device (620) in the absorption spectrum of the tracer gas;
displaying (840) a notification on a notification device (630), wherein the gas leak is indicated by the notification on the notification device (630).

12. The method of claim 11, wherein the infrared imaging device (620) is the mercury cadmium telluride (MCT) photodetector.

13. The method of claim 11, wherein the infrared imaging device (620) is the indium antimonide (InSb) photodetector.

14. The method of claim 11, wherein the infrared imaging device (620) is the mid-wavelength quantum well infrared photodetector (QWIP).

15. The method of claim 11, further comprising:
the machine (15) is on-grid or on-line, and injecting the carbon dioxide into the machine (15) until a mixture of hydrogen and carbon dioxide has a content ratio of carbon dioxide of between about 0.1% to about 10%; or
the machine (15) is off-grid or off-line, and injecting the carbon dioxide into the machine (15) until a mixture of hydrogen and carbon dioxide has a content ratio of carbon dioxide of between about 0.1% to about 100%.
